# EUROPEAN PATENT SPECIFICATION

(11) **EP 0 927 421 B1**
(45) Date of publication and mention of the grant of the patent: **02.07.2003**
(21) Application number: 98909685.4
(22) Date of filing: 02.04.1998
(51) Int. Cl.: G11B 23/107

(54) **CASSETTE HAVING AT LEAST ONE AXIALLY MOVABLE REEL AND HAVING BLOCKING MEANS FOR BLOCKING AN AXIAL MOVEMENT OF THE REEL**
CASSETTE MIT MINDESTENS EINER AXIAL BEWEGBAREN SPULE UND EINER VORRICHTUNG ZUR BLOCKIERUNG DER AXIALEN BEWEGUNG DIESER SPULE
CASSETTE AVEC AU MOINS UNE BOBINE A DEPLACEMENT AXIAL ET AVEC UN SYSTEME DE BLOCAGE POUVANT EMPECHER LEDIT DEPLACEMENT AXIAL DE LA BOBINE

(30) Priority: 03.04.1997 EP 97890061
(43) Date of publication of application: 07.07.1999
(73) Proprietor: Koninklijke Philips Electronics N.V., 5621 BA Eindhoven (NL)
(72) Inventor: KLETZL, Franz, NL-5656 AA Eindhoven (NL)
(74) Representative: Weber, Helmut
(86) International application number: IB9800480
(87) International publication number: WO98044506

(56) References cited:
- US-A- 4 449 676
- US-A- 5 027 249
- US-A- 5 052 634
- US-A- 5 366 173
- US-A- 5 436 782
- US-A- 5 813 622

## Description

The invention relates to a cassette having a box-shaped housing, which comprises a bottom wall, an upper wall parallel to the bottom wall, and side walls which connect the bottom wall and the upper wall to one another, and which accommodates at least one reel which comprises a reel hub and at least one reel flange and which is adapted to take up a magnetic tape and which is drivable so as to be rotated about a reel axis which extends perpendicularly to the bottom wall and which is movable in a direction parallel to the reel axis between a rest position, in which latching means, arranged between the reel and the housing, lock the reel against rotation about the reel axis, and a drive position, in which the latching means are inoperative and the reel is drivable by means of a reel drive device with which it can be brought into driving engagement in a direction parallel to the reel axis through a passage provided in the bottom wall, and the reel, in the absence of the reel drive device, can be held in its rest position by means of a spring, which is arranged inside the housing and which urges the reel towards the bottom wall, and which is movable away from the bottom wall by means of the reel drive device from its rest position into its drive position.

Such a cassette of the type defined in the opening paragraph is known, for example, form the document US 5,366,173A. In this known cassette the latching means for latching the reel against rotation are arranged in the area of the reel hub and are formed by a latching tab, which projects from the upper wall of the cassette housing in a direction parallel to the reel axis, and by a latching disc, which is rotationally coupled to the latching tab in a direction transverse to the reel axis and which is movable in a direction parallel to the reel axis between a latching position and a non-latching position. A pressure spring arranged between the upper wall of the cassette housing and the latching disc acts on the latching disc to urge the latching disc towards a reel hub ring, as a result of which - in the absence of a reel drive device in an apparatus adapted to cooperate with the known cassette and an actuating pin for moving the latching disc, which pin extends centrally through the reel drive device - the latching disc is held in its latching position, in which teeth provided on this disc are in mesh with corresponding teeth provided on the reel hub ring, thereby locking the reel against rotation about the reel axis. When the known cassette is loaded into an apparatus adapted to cooperate with the cassette the reel drive device and the actuating pin enter into engagement with the reel and the latching disc, upon which the reel is moved parallel to the reel axis away from the bottom wall of the cassette housing from its rest position into its drive position and the latching disc is moved parallel to the reel axis away from the bottom wall of the cassette housing from its latching position into its non-latching position against the force of the pressure spring. As a result of this, the reel is no longer locked against rotation and the reel can be driven rotationally by means of the reel drive device.

A problem of the known cassette is that the latching disc of the latching means - when the cassette is not in operation and situated outside an apparatus adapted to cooperate with the cassette - is readily and freely accessible through the passage provided to give access for the reel drive device and of the actuating pin, which may comparatively easily lead to an unintentional or inadvertent or inappropriate movement of the latching disc from its latching position into its non-latching position, which may subsequently result in an undesired rotation of the reel, which in its turn may result in the magnetic tape being wound unintentionally off the reel. Particularly when the cassette is subsequently put into operation again, such an unintentional unwinding of the magnetic tape may cause damage to the tape or also damage to parts of an apparatus which cooperate with the magnetic tape, which is obviously undesirable.

It is an object of the invention to preclude the afore-mentioned problem and to improve a cassette of the type defined in the opening paragraph and to provide an improved cassette in which an unintentional rotation of the reel is avoided with a comparatively high degree of certainty. According to the invention, in order to achieve this object in a cassette of the type defined in the opening paragraph, the latching means are arranged inside the housing of the cassette at locations which are inaccessible from outside the cassette and blocking means are arranged in the area of the reel hub of the reel, by means of which a movement of the reel in a direction parallel to the reel axis from its rest position into its drive position can be prevented and which are movable by means of an actuating device, namely from a blocking position, in which they prevent a movement of the reel from its rest position into its drive position, into a release position, in which they permit a movement of the reel from its rest position into its drive position. Owing to these measures in accordance with the invention it is achieved in a constructionally very simple as well as economical manner that an unintentional or inadvertent or inappropriate movement or actuation of the latching means is wholly excluded and that by a suitable construction and arrangement of the blocking means an unintentional movement of the reel from its rest position into its drive position and, consequently, an unintentional deactivation of the latching means is excluded in a highly reliable manner.

In a cassette in accordance with the invention having the characteristic features defined in Claim 1, it has proved to be advantageous if, in addition, the measures defined in the dependent Claim 2 are taken. This has proved to be advantageous in view of a very simple yet effective construction. It is to be noted that, alternatively, the latching means can be formed by two inter-engageable contrate-type toothed elements, of which one toothed element is connected to the bottom wall of the cassette housing and the other toothed element is connected to the reel flange adjacent the bottom wall of the housing or, alternatively, to the reel hub adjacent the bottom wall of the housing. It is alternatively possible to provide latching means which comprise, for example, four latching teeth which each project from a side wall in a direction toward the reel axis and which cooperate with spur teeth provided on the circumference of a reel flange.

In a cassette in accordance with the invention having the characteristic features defined in Claim 1, it has also proved to be advantageous if, in addition, the measures defined in the dependent Claim 3 are taken. This has proved to be advantageous in view of a particularly compact construction. The measures defined in the dependent Claim 3 can also be applied advantageously in a cassette in accordance with the invention as defined in the dependent Claim 2.

In a cassette in accordance with the invention having the characteristic features defined in the dependent Claim 3, it has proved to be advantageous if, in addition, the measures defined in the dependent Claim 4 are taken. During practical tests such an embodiment has proved to be particularly advantageous. Further advantageous features of such an embodiment are a high reliability of operation and dependability, the positive characteristics of this embodiment being also maintained after a long period of use.

In a cassette in accordance with the invention having the characteristic features defined in the dependent Claim 4, it has proved to be advantageous if, in addition, the measures defined in the dependent Claim 5 are taken. Such an embodiment of a cassette in accordance with the invention has the advantage of a particularly high reliability of operation and, moreover, guarantees a simple and reliable positioning of all the blocking levers in their blocking positions.

In a cassette in accordance with the invention having the characteristic features defined in the dependent Claim 5, it has proved to be advantageous if, in addition, the measures defined in the dependent Claim 6 are taken. Such an embodiment has proved to be particularly advantageous for a reliable movement of the blocking lever from its release position into its blocking position by means of the annular spring.

In a cassette in accordance with the invention having the characteristic features defined in the dependent Claim 6, it has proved to be advantageous if, in addition, the measures defined in the dependent Claim 7 are taken. Such an embodiment has proved to be particularly advantageous for a reliable movement of the blocking lever from its blocking position into its release position by means of an actuating device in the apparatus.

In a cassette in accordance with the invention having the characteristic features defined in the dependent Claim 7, it has proved to be advantageous if, in addition, the measures defined in the dependent Claim 8 are taken. In this way, a particularly simple construction is obtained.

In a cassette in accordance with the invention having the characteristic features defined in the dependent Claim 4, it has proved to be very advantageous if, in addition, the measures defined in the dependent Claim 9 are taken. Such an embodiment has the advantage of a uniform distribution of the force exerted on both the supporting member and the reel hub and thus the entire reel, and further ensures a well-protected mounting of the pressure spring between the supporting member and the reel hub of the reel. The measures defined in the dependent Claim 9 can also be applied advantageously to cassettes in accordance with the invention as defined in the dependent Claims 5, 6, 7 and 8.

In a cassette in accordance with the invention having the characteristic features defined in the dependent Claim 9, it has proved to be very advantageous if, in addition, the measures defined in the dependent Claim 10 are taken. This has proved to be very advantageous in view of a compact and simple construction.

In a cassette in accordance with the invention having the characteristic features defined in the dependent Claim 1, it has also proved to be very advantageous if, in addition, the measures defined in the dependent Claim 11 are taken. In this way, it is achieved that no separate actuating device is needed for moving the blocking means arranged in the reel hub area of the reel, but that the blocking means can be moved by means a part of the reel drive device which must be brought into driving engagement with the reel at any rate. The measures defined in the dependent Claim 11 can also be applied advantageously to cassettes in accordance with the invention as defined in the dependent Claims 2 to 10.

The above-mentioned as well as further aspects of the invention will become apparent from the embodiment described hereinafter by way of example and will be elucidated by means of this embodiment.

The invention will now be described in more detail with reference to the drawings, which show an embodiment to which the invention is not limited.

Figure 1 is a cross-sectional view taken on the line I-I in Figure 3 and shows a cassette in accordance with a first embodiment of the invention, a reel accommodated in the cassette, which reel is movable in a direction parallel to the reel axis, being in its rest position and blocking means arranged in the area of the reel hub of the reel being in their blocking position.

Figure 2 shows a detail of the cassette of Figure 1, to an enlarged scale in comparison with Figure 1, to illustrate the construction of the latching means provided in the cassette.

Figure 3 is a plan view showing a lower housing section of the cassette of Figure 1 with the parts of this cassette accommodated in the housing section.

Figure 4 shows a part of the cassette of Figure 1 in a manner similar to Figure 1 but to an enlarged scale in comparison with Figure 1 and mainly shows the area with the reel hub of the reel, the blocking means arranged in the area of the reel hub being shown in their blocking position.

Figure 5 shows a part of the cassette of Figure 1 in a manner similar to Figure 4, the blocking means being shown in a first intermediate position.

Figure 6 shows a part of the cassette of Figure 1 in a manner similar to Figures 4 and 5, the blocking means being shown in a second intermediate position.

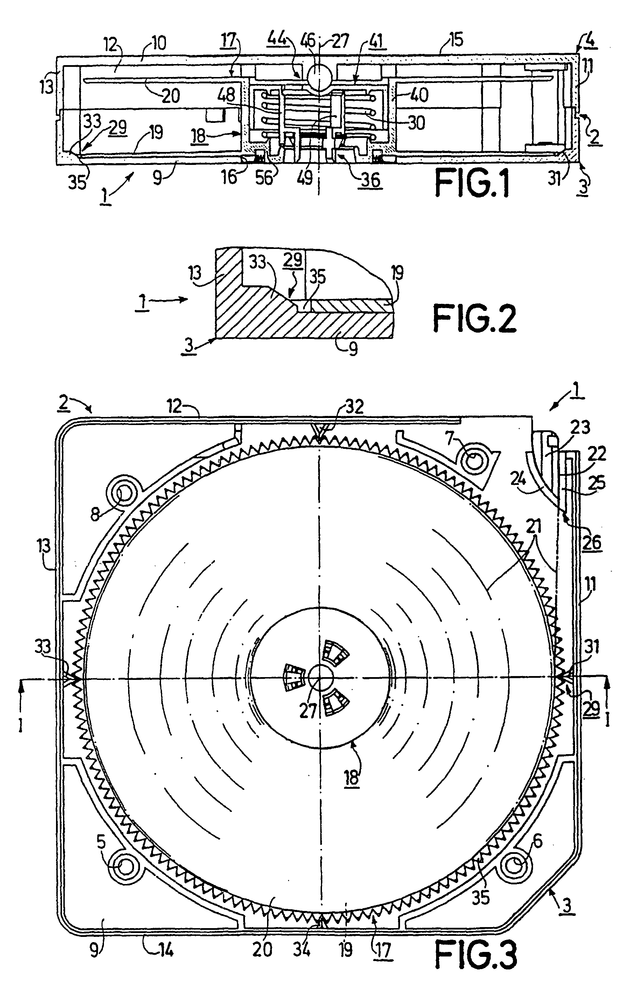

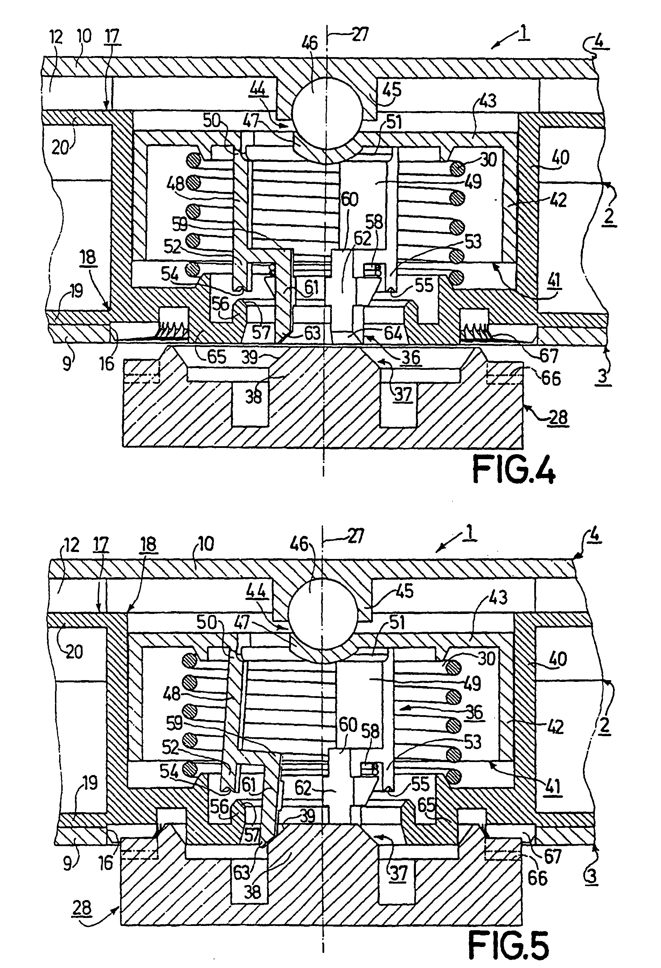

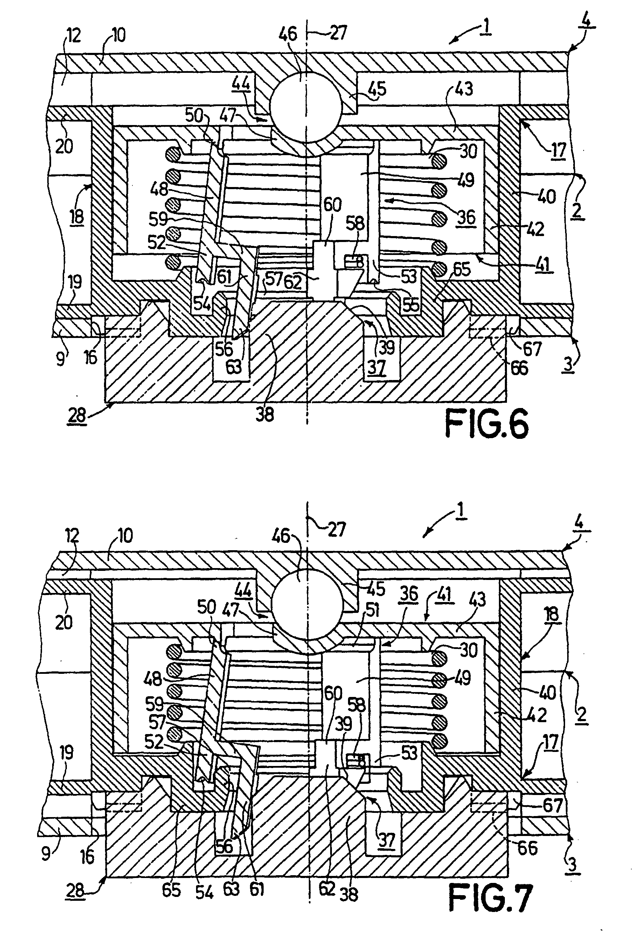

Figure 6 shows a part of the cassette of Figure 1 in a manner similar to Figures 4, 5 and 6, the blocking means being shown in its release position.

Figures 1 to 7 show a cassette 1 in accordance with the invention. The cassette has a box-shaped housing comprising a trough-like lower housing section 3 and a similarly trough-like upper housing section 4. The lower housing section 3 and the upper housing section 4 are secured to one another by means of four screws, not shown, which have been passed through four holes 5, 6, 7 and 8 and extend up to the upper housing section 4, into which they have been screwed. By connecting the lower housing section 3 and the upper housing section 4 to one another the box-shaped housing 2 is obtained, which thus comprises a bottom wall 9, an upper wall 10 parallel to the bottom wall 9, and side walls 11, 12, 13 and 14 which connect the bottom wall 9 and the upper wall 10 to one another. The upper wall 10 has a recessed portion which accommodates a label 15 shown only in Figure 1. The bottom wall 9 has a passage 16 of circular cross-section. The purpose of this passage 16 will be explained hereinafter.

The housing 2 of the cassette 1 accommodates a reel 17. The reel 17 has a reel hub 18, a first reel flange 19 at the side of the bottom wall side and a second reel flange 20 at the side of the upper wall. The reel 17 serves to take up a magnetic tape 21, which is shown only in Figure 3 in dash-dot lines. The magnetic tape 21 has one end connected to the reel hub 18 in a manner not shown. The magnetic tape 21 has its other end 22 connected to a coupling member 23 which is positioned in a coupling position in a substantially V-shaped positioning wedge 26 formed by two bounding walls 24 and 25 connected to the bottom wall 9 and extending perpendicularly to the bottom wall 9, in which position the coupling member 23 can be coupled to an extraction member of an apparatus adapted to cooperate with the cassette 1, after which the coupling member 23 and, consequently, the magnetic tape 21 can be extracted from the cassette 1 by means of the extraction member, which is movable in the apparatus so as to be brought in particular onto operational contact with a magnetic head for scanning the magnetic tape 21.

The reel 17 is drivable so as to be rotated about a reel axis 27 which extends perpendicularly to the bottom wall 9 and, as a consequence, also perpendicularly to the upper wall 10. The reel 17 can be driven by means of a reel drive device 28 of an apparatus adapted to cooperate with the cassette 1, which device can be brought into driving engagement with the reel 17 through the passage 16 in the bottom wall 9 in a direction parallel to the reel axis 27. Such a reel drive device 28 is shown diagrammatically in Figures 4 to 7. Figures 4 to 7 only show the part of the reel drive device 28 which cooperates directly with the reel 17 of the cassette 1, because only this part is relevant in the present context. It is to be noted that the reel drive device 28 comprises a drive motor by means of which the part of the reel drive device 28 shown in Figures 4 to 7 is rotationally drivable in a controlled manner.

The reel 17 is movable in a direction parallel to the reel axis 27, namely between a rest position shown in Figures 1 and 4 and a drive position shown in Figure 7. In the rest position shown in Figures 1 and 4 latching means 29, whose construction is apparent in particular from Figures 2 and 3, lock the reel against rotation about the reel axis 27. In the drive position shown in Figure 7 the latching means 29 are inoperative and the reel 17 is rotationally drivable by means of the reel drive device 28. On the one hand, in the absence of the reel drive device 28, the reel 17 can be held in its rest position shown in Figures 1 and 4 by means of a spring 30, which is arranged inside the housing 2 and which urges the reel 17 towards the bottom wall 9, and, on the other hand, it is movable away from the bottom wall 9 by means of the reel drive device 28 from its rest position shown in Figures 1 and 4 into its drive position shown in Figure 7.

In the cassette 1 shown in Figures 1 to 7 the latching means 29 are suitably arranged inside the housing 2 of the cassette 1 at locations which are inaccessible from outside the cassette 1. The latching means 29 comprise four wedge-shaped latching teeth 31, 32, 33 and 34, which are each connected to the bottom wall 9 in an area near the bottom wall and a respective one of the side walls 11, 12, 13 and 14 and thus project both from the bottom wall 9 and from the respective one of the side walls 11, 12, 13 and 14, as well as latching teeth 35 provided on the reel 17, in the present case on the first reel flange 19 of the reel 17.

Advantageously, the cassette 1 further comprises blocking means 36 in the area of the reel hub 18 of the reel 17, by means of which a movement of the reel 17 in a direction parallel to the reel axis 27 from its rest position shown in Figures 1 and 4 into its drive position shown in Figure 7 can be prevented. The blocking means 36 are movable by means of an actuating device 37, namely from a blocking position shown in Figures 1 and 4, in which they block a movement of the reel 17 from its rest position into its drive position, into a release position shown in Figure 7, in which they permit a movement of the reel 17 from its rest position into its drive position. In the present cassette 1 the blocking means 36 have such a construction that they are movable with the aid of an actuating device 37, which is formed by a part 38 of the reel drive device 28. As can be seen in Figures 4 to 7, the part 38 of the reel drive device 28 is formed by a substantially cylindrical projection of the reel drive device 28, which is at least substantially coaxial with the reel axis 27 and which has a circumferential taper 39 at its free end so as to ensure a smooth and correct cooperation with the blocking means 36.

In the cassette 1 the reel hub 18 of the reel 17 has a hollow cylindrical wall portion 40 from which the two reel flanges 19 and 20 project radially. Inside this hollow cylindrical wall portion 40 of the reel hub 18 the blocking means 36 are arranged, which has proved to be advantageous for a construction which is as compact as possible.

As is apparent particularly from Figures 4 to 7, a cup-like bearing member 41 for the reel 17 is arranged inside the hollow cylindrical wall portion 40 of the reel hub 18. The cup-like bearing member 41 has a circumferential cup wall 42 and a cup bottom wall 43. The circumferential cup wall 42 is an accurate fit in the hollow cylindrical wall portion 40 of the reel hub 18. The cup bottom wall 43 is disposed adjacent the upper wall 10 of the housing 2.

A pivotal bearing device 44 for rotatably supporting the reel 17 is interposed between the upper wall 10 of the housing 2 of the cassette 1 and the cup bottom wall 43 of the bearing member 41. The pivotal bearing device 44 comprises a bearing ball 46 which is non-rotatably mounted in a projection 45 on the upper wall 10 and a bearing socket 47 for the bearing ball 46, which bearing socket is integral with the cup bottom wall 43 of the bearing member 41. The bearing socket 47 is rotatable relative to the bearing ball 46, namely about the reel axis 27. The bearing member 41, which has only comparatively small dimensions, can be made of a comparatively expensive synthetic material having good antifriction properties with respect to the bearing ball 46 in order to achieve satisfactory bearing properties. This has the advantage that the two housing sections 3 and 4, particularly the upper housing section 4, can be made of a comparatively cheap synthetic material because the upper housing section 4 merely serves for non-rotatably holding the bearing ball 46 and need not have a bearing function.

It is to be noted that the hollow cylindrical wall portion 40 of the reel hub 18 is movable with respect to the circumferential cup wall 42 of the bearing member 41 in a direction parallel to the reel axis 27. Such a movement of the hollow cylindrical wall portion 40 with respect to the circumferential cup wall 42 takes place during a movement of the reel 17 between its rest position and its drive position.

In the cassette 1 the blocking means 36 advantageously comprise three blocking levers which are pivotally connected to the cup bottom wall 43 of the bearing member 41 and which project from the cup bottom wall 43 towards the bottom wall 9 of the housing 2. Of the three blocking levers in total only the two blocking levers 48 and 49 are shown in Figures 1, 4, 5, 6 and 7. As regards the manner in which the two blocking levers 48 and 49 are shown in Figures 5 to 7, it is to be borne in mind that for the clarity of the drawings only the blocking lever 48 is shown in its first intermediate position, its second intermediate position and its release position, respectively, whereas the blocking lever 49 is always shown in its blocking position, which does not correspond to the actual situation to be illustrated in the Figures 5, 6 and 7.

The blocking levers 48 and 49 are each pivotally connected to the cup bottom wall 43 of the bearing member 41 via an integral hinge 50 and 51, respectively. The blocking levers 48 and 49 each have a blocking stop 52 and 53, respectively, each of the blocking stops 52 and 53 having a V-shaped recess 54 and 55, respectively. When the blocking means 36 are in the blocking position shown in Figure 4 each blocking stop 52 or 53 is disposed in a direction parallel to the reel axis 27 opposite a blocking ring 56 arranged in the area of the reel hub 18. The blocking ring 56 is wedge-shaped at its side 57 which faces the blocking levers 48 and 49, which shape corresponds to the recesses 54 and 55 of the blocking stops 52 and 53.

The three blocking levers, of which only the blocking levers 48 and 49 are shown in Figure 1 and Figures 4 to 7, can be positioned in their blocking positions shown in Figure 4 by means of an annular spring 58, which is substantially coaxial with the reel axis 27. For this purpose, each blocking lever 48 and 49 in the cassette 1 has an L-shaped portion which projects radially towards the reel axis 27 of the reel 17 and the annular spring 58 surrounds the limbs 61 and 62 of the L-shaped portions 59 and 60, which limbs extend substantially perpendicularly to the cup bottom wall 43 of the bearing member 41. In this way, it is achieved by simple means that the blocking levers 48 and 49 can be positioned reliably and accurately in their blocking positions.

In the cassette 1 shown in Figures 1 to 7 the free ends 63 and 64 of the limbs 61 and 62 of the L-shaped portions 59 and 60, which limbs extend transversely to the cup bottom wall 43 of the bearing member 41 are adapted to cooperate with the actuating device 37 for actuating the blocking levers 48 and 49. In the present case the free ends 63 and 64 are adapted to cooperate with the part 38 of the reel drive device 28, which part takes the form of a substantially cylindrical projection.

It is to be noted that the bearing member 41 and the two blocking levers 48 and 49 as well as the third blocking lever,not shown, and the L-shaped portions 59 and 60 of the two blocking levers 48 and 49 and the L-shaped portion, not shown, of the third blocking lever are formed by a single synthetic-resin part, which has proved to be advantageous for an extremely simple construction.

In the cassette 1, as is further apparent from Figures 1 and 4 to 7, a ring-like wall portion 65 of the reel hub 18 is connected to the hollow cylindrical wall portion 40 of the reel hub 18, which ring-like wall portion projects from the hollow cylindrical wall portion 40 towards the reel axis 27 of the reel 17 and which, despite some stepped portions and raised portions extends substantially parallel to the bottom wall 9, and a helical pressure spring, which forms the afore-mentioned spring 30 which urges the reel 17 towards the bottom wall 9, is arranged between the bearing member 41 and the reel 17 and at one end acts upon the cup bottom wall 43 of the bearing member 41 and at the other end upon the ring-like wall portion 65 of the reel hub 18.

In the cassette 1, as is further apparent from Figures 1 and 4 to 7, the blocking ring 56, which is adapted to cooperate with the blocking stops 52 and 53 of the blocking lever 48, is connected to the ring-like wall portion 65 of the blocking ring 56 in the inner area of the ring-like wall portion 65 of the reel hub 18.

As long as a cassette 1 in accordance with the invention, as shown in Figures 1 to 7, is situated outside an apparatus adapted to cooperate with this cassette 1, the reel 17 accommodated in the cassette 1 is in its rest position shown in Figures 1 to 4, in which position the latching means 29 ensure that the reel 17 is locked against rotation about the reel axis 27.

When the cassette 1 is loaded into an apparatus adapted to cooperate with the cassette 1 such a loading operation produces a relative movement between the cassette 1 and the drive device 28. This can be achieved in that the cassette 1 is moved towards the drive device 28 or in that the drive device 28 is moved towards the cassette 1. In each of these cases the reel 17 drive device 28 enters into operational engagement with the reel hub 18 of the reel through the passage 16 in the bottom wall 9 of the cassette 1. The free ends 63 and 64 of the L-shaped portions 59 and 60 of the blocking levers 48 and 49 then first engage with tape 39 of the part 38 of the reel drive device 28, as can be seen in Figure 5. As a result of this, the blocking levers 48 and 49 are pivoted away from the reel axis 27, during which pivotal movement these levers 48 and 49 assume the first intermediate position shown in Figure 5 and subsequently assume the second intermediate position shown in Figure 6.

In the second intermediate position of the blocking levers 48 and 49, shown in Figure 6, the reel 17 is still in its rest position, in which it is locked against rotation with the aid of the latching means 29. In the second intermediate position shown in Figure 6 the ring-like wall portion 65 of the reel hub 18 already engages wholly with the reel drive device 28. Thus, it is achieved that drive teeth 66 provided on the reel drive device 28 and shown only diagrammatically in Figures 4 to 7 are in mesh with corresponding teeth 67 provided in the area of the ring-like wall portion 65 of the reel hub 18, so that it is guaranteed that the reel 17 is rotationally drivable by means of the reel drive device 28.

Subsequently, the reel drive device 28 moves the reel 17 away from the bottom wall 9 of the housing 2 of the cassette 1 in a direction parallel to the reel axis 27, i.e. into the drive position of the reel 17 shown in Figure 7, in which the latching teeth 31, 32, 33 and 34 are not in mesh with the latching teeth 35, which is not visible in Figure 7 but which evident in view of the distance of the lower first reel flange 19 from the bottom wall 9 of the housing 2. The reel 17 can now be rotationally driven by means of the reel drive device 28.

In the cassette 1 in accordance with the invention described hereinbefore it is achieved in a constructionally very simple as well as very economical manner that an unintentional or inadvertent or inappropriate movement or actuation of the latching means 29 is wholly excluded because the latching means 29 are arranged and constructed in such a manner that they are disposed completely inside the housing 2 of the cassette 1. As a result of the above-described construction and arrangement of the blocking means 37 formed by three blocking levers an unintentional movement of the reel 17 from its rest position into its drive position and, consequently, an unintentional deactivation of the latching means 29 is excluded in a highly reliable manner because all three blocking levers should be moved simultaneously from their blocking positions into their release positions to allow a movement of the reel 17 from its rest position into its drive position. Such a simultaneous movement of all three blocking levers is practically only possible with the aid of suitably constructed actuating means and is very difficult to achieve in an unintentional or inappropriate manner.

The invention is not limited to the embodiment described hereinbefore by way of example. For example, it is also possible to provide more than three blocking levers. Furthermore, the blocking levers can be constructed without L-shaped portions and cooperate directly with actuating means via their free ends. Moreover, the measures in accordance with the invention are not limited to a cassette having only one reel but can also be applied to a magnetic-tape cassette having two juxtaposed reels.

## Claims

1. A cassette (1)
having a box-shaped housing (2), which comprises a bottom wall (9), an upper wall (10) parallel to the bottom wall (9), and side walls (11, 12, 13, 14) which connect the bottom wall (9) and the upper wall (10) to one another, and which accommodates at least one reel (17) which comprises a reel hub (18) and at least one reel flange (19, 20)
and which is adapted to take up a magnetic tape (21)
and which is drivable so as to be rotated about a reel axis (27) which extends perpendicularly to the bottom wall (9)
and which is movable in a direction parallel to the reel axis (27) between a rest position, in which latching means (29), arranged between the reel (17) and the housing (2), lock the reel (17) against rotation about the reel axis (27), and a drive position, in which the latching means (29) are inoperative and the reel (17) is drivable by means of a reel drive device (28) with which it can be brought into driving engagement in a direction parallel to the reel axis (27) through a passage (16) provided in the bottom wall (9), and the reel (17), in the absence of the reel drive device (28), can be held in its rest position by means of a spring (30),
which is arranged inside the housing (2) and which urges the reel (17) towards the bottom wall (9),
and which is movable away from the bottom wall (9) by means of the reel drive device (28) from its rest position into its drive position,
**characterized in that**
the latching means (29) are arranged inside the housing (2) of the cassette (1) at locations which are inaccessible from outside the cassette (1)
and blocking means (36) are arranged in the area of the reel hub (18) of the reel (17),
by means of which a movement of the reel (17) in a direction parallel to the reel axis (27) from its rest position into its drive position can be prevented
and which are movable by means of an actuating device (37), namely from a blocking position, in which they prevent a movement of the reel (17) from its rest position into its drive position, into a release position, in which they permit a movement of the reel (17) from its rest position into its drive position.

2. A cassette (1) as claimed in Claim 1, **characterized in that** the latching means (29) comprise at least one latching tooth (31, 32, 33, 34), which projects from at least one wall (9, 11, 12, 13, 14) of the housing (2) in an area near the bottom wall, and latching teeth (35) provided on the reel (17).

3. A cassette (1) as claimed in Claim 1, **characterized in that** the reel hub (18) of the reel (17) has a hollow cylindrical wall portion (40) and the blocking means (36) are arranged inside the hollow cylindrical wall portion (40) of the reel hub (18).

4. A cassette (1) as claimed in Claim 3, **characterized in that** a cup-like bearing member (41) for the reel (17) is arranged inside the hollow cylindrical wall portion (40) of the reel hub (18), which bearing member has a circumferential cup wall (42) which engages with the hollow cylindrical wall portion (40) of the reel hub (18) and a cup bottom wall (43) which is disposed adjacent the upper wall (10) of the housing (2), a pivotal bearing device (44) for rotatably supporting the reel (17) being interposed between the upper wall (10) of the housing (2) and the cup bottom wall (43) of the bearing member (41) and the hollow cylindrical wall portion (40) of the reel hub (18) being movable with respect to the circumferential cup wall (42) of the bearing member (41) in a direction parallel to the reel axis (27),
and the blocking means (36) comprise at least one blocking lever (48, 49) which is pivotally connected to the cup bottom wall (43) of the bearing member (41) and which projects from the cup bottom wall (43) towards the bottom wall (9) of the housing (2), which at least one blocking lever has a blocking stop (52, 53) which, when the blocking means (36) are in their blocking position, is disposed in a direction parallel to the reel axis (27) opposite a blocking ring (56) arranged on the reel (17) in the area of its reel hub (18).

5. A cassette (1) as claimed in Claim 4, **characterized in that** the blocking means (36) comprise at least three blocking levers (48, 49) which are pivotally connected to the cup bottom wall (43) and which can be positioned into their blocking positions by means of an annular spring (58) which is substantially coaxial with the reel axis (27).

6. A cassette (1) as claimed in Claim 5, **characterized in that** each blocking lever (48, 49) has an L-shaped portion (59, 60) which projects substantially radially towards the reel axis (27) of the reel (17) and the annular spring (58) surrounds those limbs (61, 62) of the L-shaped portions (59, 60) which extend substantially perpendicularly to the cup bottom wall (43) of the bearing member (41).

7. A cassette (1) as claimed in Claim 6, **characterized in that** the free ends (63, 64) of those limbs (61, 62) of the L-shaped portions (59, 60) which extend substantially perpendicularly to the cup bottom wall (43) of the bearing member (41) are adapted to cooperate with an actuating device (37) for actuating the blocking levers (48, 49).

8. A cassette (1) as claimed in Claim 7, **characterized in that** the bearing member (41) and the blocking levers (48, 49) and the L-shaped portions (59, 60) of the blocking levers (48, 49) are formed by a single synthetic-resin part and the blocking levers (48, 49) are each pivotally connected to the cup bottom wall (43) of the bearing member (41) via an integral hinge (50, 51).

9. A cassette (1) as claimed in Claim 4, **characterized in that** a ring-like wall portion (65) of the reel hub (18) is connected to the hollow cylindrical wall portion (40) of the reel hub (18), which ring-like wall portion (65) projects from the hollow cylindrical wall portion (40) towards the reel axis (27) of the reel (17), is disposed adjacent the bottom wall (9) of the housing (2) and extends substantially parallel to this bottom wall (9), and a helical pressure spring (30) is arranged between the bearing member (41) and the reel (17) and acts at one end upon the cup bottom wall (43) of the bearing member (41) and at the other end upon the ring-like wall portion (65) of the reel hub (18).

10. A cassette (1) as claimed in Claim 9, **characterized in that** the blocking ring (56), which is adapted to cooperate with the blocking stop (52, 53) of a blocking lever (48, 49), is connected to the ring-like wall portion (65) of the blocking ring (56) in the inner area of the ring-like wall portion (65) of the reel hub (18).

11. A cassette (1) as claimed in Claim 1, **characterized in that** the blocking means (36) have such a construction that they are movable with the aid of an actuating device (37) which is formed by a part (38) of the reel drive device (28).

## Patentansprüche

1. Kassette (1) mit einem dosenförmigen Gehäuse (2), wobei dieses Gehäuse eine Bodenwand (9), eine obere Wand (10) parallel zu der Bodenwand (9), und Seitenwände (11, 12, 13, 14) aufweist, welche die Bodenwand (9) und die obere Wand (10) miteinander verbinden und wobei das Gehäuse wenigstens eine Spule (17) enthält, die eine Spulennabe (18) und wenigstens einen Spulenflansch (19, 20) aufweist, wobei diese Spule dazu vorgesehen ist, ein Magnetband (21) aufzuwickeln, und antreibbar ist um um eine Spulenachse (27) gedreht zu werden, wobei diese Spulenachse sich senkrecht zu der Bodenwand (9) erstreckt, und wobei diese Spule bewegbar ist in einer Richtung parallel zu der Spulenachse (27), und zwar zwischen einer Ruhelage, in der Verriegelungsmittel (29), vorgesehen zwischen der Spule (17) und dem Gehäuse (2), die Spule (17) vor Drehung um die Spulenachse (27) sichern, und einer Antriebslage, in der die Verriegelungsmittel (29) nicht wirksam sind und die Spule (17) mit Hilfe einer Spulenantriebsvorrichtung (28) antreibbar ist, mit der sie in einer Richtung parallel zu der Spulenachse (27) durch einen Durchgang (16) in der Bodenwand (9) hindurch in Antriebswirkung gebracht werden kann, und wobei die Spule (17), beim Fehlen der Spulenantriebsvorrichtung (28), mit Hilfe einer Feder (30) in der Ruhelage gehalten werden kann, wobei diese Feder innerhalb des Gehäuses (2) vorgesehen ist und die Spulen (17) in Richtung der Bodenwand (9) drückt, und die mit Hilfe der Spulenantriebsvorrichtung (28) weg von der Bodenwand (9) aus der Ruhelage in die Antriebslage bewegt werden kann, **dadurch gekennzeichnet, dass** die Verriegelungsmittel (29) innerhalb des Gehäuses (2) der Kassette (1) vorgesehen sind, und zwar an Stellen, die von außerhalb der Kassette (1) nicht zugänglich sind und wobei Blockierungsmittel (36) in dem Bereich der Spulennabe (18) der Spule (17) vorgesehen sind, mit deren Hilfe eine Bewegung der Spule (17) in einer Richtung parallel zu der Spulenachse (27) aus der Ruhelage in die Antriebslage vermieden werden kann, und wobei diese Blockierungsmittel mit Hilfe einer Betätigungsvorrichtung (37) bewegbar sind, und zwar aus einer Blockierungslage, in der sie eine Bewegung der Spule (17) aus der Ruhelage in die Betriebslage vermeiden, in eine Freigabelage, in der sie eine Bewegung der Spule (17) aus der Ruhelage in die Antriebslage gestatten.

2. Kassette (1) nach Anspruch 1, **dadurch gekennzeichnet, dass** die Verriegelungsmittel (29) wenigstens einen Verriegelungszahn (31, 32, 33, 34) aufweisen, der von wenigstens einer Wand (9, 11, 12, 13, 14) des Gehäuses (2) in einem Bereich in der Nähe der Bodenwand hervorragt, und dass Verriegelungszähne (33) an der Spule (17) vorgesehen sind.

3. Kassette (1) nach Anspruch 1, **dadurch gekennzeichnet, dass** die Spulennabe (18) der Spule (17) einen hohlen zylinderförmigen Wandteil (40) aufweist und die Blockierungsmittel (36) innerhalb des hohlen zylinderförmigen Wandteils (40) der Spulennabe (18) vorgesehen sind.

4. Kassette (1) nach Anspruch 3, **dadurch gekennzeichnet, dass** ein schalenförmiges Lagerelement (41) für die Spule (17) innerhalb des hohlen zylinderförmigen Wandteils (40) der Spulennabe (18) vorgesehen ist, wobei dieses Lagerelement eine kreisrunde Schalenwand (42) aufweist, die mit dem hohlen zylinderförmigen Wandteil (40) der Spulennabe (18) zusammenarbeitet, und eine Schalenbodenwand (43), die angrenzend an die obere Wand (10) des Gehäuses (2) vorgesehen ist, wobei eine schwenkbare Lagervorrichtung (44) zum drehbaren Unterstützen der Spule (17) zwischen der oberen Wand (10) des Gehäuses (2) und der Schalenbodenwand (43) des Lagerelementes (41) vorgesehen ist, und wobei der hohle zylinderförmige Wandteil (40) der Spulennabe (18) gegenüber der kreisrunden Schalenwand (42) des Lagerelementes (41) bewegbar ist, und zwar in einer Richtung parallel zu der Lagerachse (27), und dass die Blockierungsmittel (36) wenigstens einen Blockierungshebel (48, 49) aufweisen, der mit der Schalenbodenwand (43) des Lagerelementes (41) schwenkbar verbunden ist und wobei dieser Hebel von der Schalenbodenwand (43) in Richtung der Bodenwand (9) des Gehäuses (2) hervorragt, wobei dieser wenigstens eine Blockierungshebel einen Blockierungsanschlag (52, 53) aufweist, der, wenn die Blockierungsmittel (36) sich in der Blockierungslage befinden, in einer Richtung parallel zu der Spulenachse (27) gegenüber einem Blockierungsring (56) auf der Spule (17) in dem Bereich der Spulennabe (18) vorgesehen ist.

5. Kassette (1) nach Anspruch 4, **dadurch gekennzeichnet, dass** die Blockierungsmittel (36) wenigstens drei Blockierungshebel (48, 49) aufweisen, die mit der Schalenbodenwand (43) schwenkbar verbunden sind und die mit Hilfe einer ringförmigen Feder (58) in ihre Blockierungslagen gebracht werden können, wobei diese Feder im Wesentlichen koaxial zu der Spulenachse (27) ist.

6. Kassette (1) nach Anspruch 5, **dadurch gekennzeichnet, dass** jeder Blockierungshebel (48, 49) einen L-förmigen Teil (59, 60) aufweist, der im Wesentlichen radial in Richtung der Spulenachse (27) der Spule (17) ragt und wobei die ringförmige Feder (58) diejenigen Schenkel (61, 62) der L-förmigen Teile (59, 60) umgibt, die sich im Wesentlichen senkrecht zu der Schalenbodenwand (43) des Lagerelementes (41) erstrecken.

7. Kassette (1) nach Anspruch 6, **dadurch gekennzeichnet, dass** die freien Enden (63, 64) derjenigen Schenkel (61, 62) der L-förmigen Teile (59, 60), die sich im Wesentlichen senkrecht zu der Schalenbodenwand (43) des Lagerelementes (41) erstrecken, dazu vorgesehen sind, mit einer Betätigungsvorrichtung (37) zum Betätigen der Blockierungshebel (48, 49) zusammenzuarbeiten.

8. Kassette (1) nach Anspruch 7, **dadurch gekennzeichnet, dass** das Lagerelement (41) und die Blockierungshebel (48, 49) und die L-förmigen Teile (59, 60) der Blokkierungshebel (48, 49) aus einem einzigen Kunststoffteil gebildet sind und die Blockierungshebel (48, 49) je über ein Filmscharnier (50, 51) mit der Schalenbodenwand (43) des Lagerelementes (41) schwenkbar verbunden sind.

9. Kassette (1) nach Anspruch 4, **dadurch gekennzeichnet, dass** ein ringförmiger Wandteil (65) der Spulennabe (18) mit dem hohlen zylinderförmigen Wandteil (40) der Spulennabe (18) verbunden ist, wobei dieser ringförmige Wandteil (65) von dem hohlen zylinderförmigen Wandteil (40) in Richtung der Spulenachse (27) der Spule (17) hervorragt, in der Nähe der Bodenwand (9) des Gehäuses (2) vorgesehen ist und sich im Wesentlichen parallel zu der Bodenwand (9) erstreckt und dass zwischen dem Lagerelement (41) und der Spule (17) eine spiralförmige Druckfeder (30) vorgesehen ist und mit dem einen Ende an die Schalenbodenwand (43) des Lagerelementes (41) angreift und mit dem anderen Ende an dem ringförmigen Wandteil (65) der Spulennabe (18) angreift.

10. Kassette (1) nach Anspruch 9, **dadurch gekennzeichnet, dass** der Blockierungsring (56), der dazu vorgesehen ist, mit dem Blockierungsanschlag (52, 53) eines Blockierungshebels (48, 49) zusammenzuarbeiten, mit dem ringförmigen Wandteil (65) des Blockierungsringes (56) in dem inneren Bereich des ringförmigen Wandteils (65) des Blokkierungsringes (56) in dem inneren Bereich des ringförmigen Wandteils (65) der Spulennabe (18) verbunden ist.

11. Kassette (1) nach Anspruch 1, **dadurch gekennzeichnet, dass** die Blockierungsmittel (36) eine derartige Konstruktion haben, dass sie mit Hilfe einer Betätigungsvorrichtung (37) bewegbar sind, wobei diese Vorrichtung durch einen Teil (38) der Spulenantriebsvorrichtung (28) gebildet wird.

## Revendications

1. Cassette (1)
comportant un boîtier rectangulaire (2) constitué d'une paroi inférieure (9), d'une paroi supérieure (10) parallèle à la paroi inférieure (9) et de parois latérales (11, 12, 13, 14) qui raccordent la paroi inférieure (9) et la paroi supérieure (10) l'une à l'autre, et qui loge au moins une bobine (17) qui comporte un moyeu de bobine et au moins une joue de bobine (19, 20)
et qui est à même d'envider une bande magnétique (21)
et peut être entraînée pour tourner autour d'un axe de bobine (27) qui s'étend perpendiculairement à la paroi inférieure (9)
et être déplacée dans une direction parallèle à l'axe de bobine (27) entre une position de repos, dans laquelle des moyens de verrouillage (29), disposés entre la bobine (17) et le boîtier (2), verrouillent la bobine (17) contre une rotation autour de l'axe de bobine (27), et une position d'entraînement dans laquelle les moyens de verrouillage (29) sont inactifs et la bobine (17) peut être entraînée au moyen d'un dispositif d'entraînement de bobine (28) avec lequel elle peut être amenée en prise d'entraînement dans une direction parallèle à l'axe de bobine (27) à travers un passage prévu dans la paroi inférieure (9), et la bobine (17), en l'absence du dispositif d'entraînement de bobine (28), peut être maintenue dans sa position de repos au moyen d'un ressort (30), qui est disposé à l'intérieur du boîtier et qui sollicite la bobine (17) vers la paroi inférieure (9)
et peut être déplacée à l'écart de la paroi inférieure (9) au moyen du dispositif d'entraînement de bobine (28) de sa position de repos dans sa position d'entraînement, **caractérisé en ce que**
les moyens de verrouillage (29) sont disposés à l'intérieur du boîtier de la cassette (1) en des endroits qui sont inaccessibles de l'extérieur de la cassette (1)
et des moyens de blocage (36) sont disposés dans la zone du moyeu (18) de la bobine (17) grâce auxquels un déplacement de la bobine (17) dans une direction parallèle à l'axe (27) de la bobine de sa position de repos dans sa position d'entraînement peut être évité,
et qui peuvent être déplacés au moyen d'un dispositif d'actionnement (37), à savoir d'une position de blocage, dans laquelle ils empêchent un déplacement de la bobine (17) de sa position de repos dans sa position d'entraînement, dans une position de libération, dans laquelle il permet un déplacement de la bobine (17) de sa position de repos dans sa position d'entraînement.

2. Cassette (1) suivant la revendication 1, **caractérisée en ce que** les moyens de verrouillage (29) comprennent au moins une dent de verrouillage (31, 32, 33, 34), qui fait saillie d'au moins une paroi (9, 10, 11, 12, 13, 14) du boîtier (2) dans une zone près de la paroi inférieure, et des dents de verrouillage (35) prévues sur la bobine (17).

3. Cassette (1) suivant la revendication 1, **caractérisée en ce que** le moyeu (18) de la bobine (17) présente une partie de paroi cylindrique creuse (40) et les moyens de blocage (36) sont disposés à l'intérieur de la partie de paroi cylindrique creuse (40) du moyeu de bobine (18).

4. Cassette (1) suivant la revendication 3, caractérisée ce qu'une coupelle de tourillonnement (41) pour la bobine (17) est disposée à l'intérieur de la partie de paroi cylindrique creuse (40) du moyeu de bobine (18), laquelle coupelle de tourillonnement a une paroi de coupelle périphérique (42) qui vient en prise avec la partie de paroi cylindrique creuse (40) du moyeu de bobine (18) et une paroi de fond de coupelle (43) qui est disposée à proximité de la paroi supérieure (10) du boîtier (2), un dispositif de tourillonnement pivotant (44) pour supporter à rotation la bobine (17) étant disposé entre la paroi supérieure (10) du boîtier (2) et la paroi de fond (43) de la coupelle de tourillonnement (41) et la partie de paroi cylindrique creuse (40) du moyeu de bobine (18) pouvant se déplacer par rapport à la paroi périphérique (42) de la coupelle de tourillonnement (41) dans une direction parallèle à l'axe de bobine (27),
et les moyens de blocage (36) comprennent au moins un levier de blocage (48, 49) qui est articulé à la paroi de fond (43) de la coupelle de tourillonnement (41) et qui s'étend à partir de la paroi de fond de coupelle (43) vers la paroi inférieure (9) du boîtier (2), lequel au moins un levier de blocage présente une butée de blocage (52, 53) qui, lorsque les moyens de blocage (36) sont dans leur position de blocage, est disposée dans une direction parallèle à l'axe de bobine (27) en opposition à un anneau de blocage (56) disposé sur la bobine (17) dans la zone de son moyeu de bobine (18).

5. Cassette (1) suivant la revendication 4, **caractérisée en ce que** les moyens de blocage (36) comprennent au oins trois leviers de blocage (48, 49) qui sont articulés à la paroi de fond de coupelle (43) et qui peuvent être positionnés dans leurs positions de blocage au moyen d'un ressort annulaire (58) qui est essentiellement coaxial par rapport à l'axe de bobine (27).

6. Cassette (1) suivant la revendication 5, **caractérisée en ce que** chaque levier de blocage (48, 49) présente une partie en L (59, 60) qui s'étend de manière essentiellement radiale vers l'axe de bobine (27) de la bobine (17) et le ressort annulaire (58) entoure les ailes (61, 62) des parties en L (59, 60) qui s'étendent de manière essentiellement perpendiculaire à la paroi de fond (43) de la coupelle de tourillonnement (41).

7. Cassette (1) suivant la revendication 6, **caractérisée en ce que** les extrémités libres (63, 64) des ailes (61, 62) des parties en L (59, 60) qui s'étendent de manière essentiellement perpendiculaire à la paroi de fond (43) de la coupelle de tourillonnement (41) sont aptes à coopérer avec un dispositif d'actionnement (37) pour actionner les leviers de blocage (48, 49).

8. Cassette (1) suivant la revendication 7, **caractérisée en ce que** la coupelle de tourillonnement (41) et les leviers de blocage (48, 49) et les parties en L (59, 60) des leviers de blocage (48, 49) sont faits d'une seule pièce en résine synthétique et les leviers de blocage (48, 49) sont chacun articulés à la paroi de fond (43) de la coupelle de tourillonnement (41) par le biais d'une charnière intégrale (50, 51).

9. Cassette (1) suivant la revendication 4, **caractérisée en ce qu'**une partie de paroi annulaire (65) du moyeu de bobine (18) est reliée à la partie de paroi cylindrique creuse (40) du moyeu de bobine (18), laquelle partie de paroi annulaire (65) fait saillie depuis la partie de paroi cylindrique creuse (40) vers l'axe de bobine (27) de la bobine (17), est disposée à proximité de la paroi inférieure (9) du boîtier (2) et s'étend de manière essentiellement parallèle à cette paroi inférieure (9), et un ressort de pression hélicoïdal (30) est disposé entre la coupelle de tourillonnement (41) et la bobine (17) et agit, à une extrémité, sur la paroi de fond (43) de la coupelle de tourillonnement (41) et, à l'autre extrémité, sur la partie de paroi annulaire (65) du moyeu de bobine (18).

10. Cassette (1) suivant la revendication 9, **caractérisée en ce que** l'anneau de blocage (56), qui est à même de coopérer avec la butée de blocage (52, 53) d'un levier de blocage (48, 49), est relié à la partie de paroi annulaire (65) de l'anneau de blocage (56) dans la zone interne de la partie de paroi annulaire (65) du moyeu de bobine (18).

11. Cassette (1) suivant la revendication 1, **caractérisée en ce que** les moyens de blocage (36) sont d'une construction telle qu'ils peuvent être déplacés à l'aide d'un dispositif d'actionnement (37) qui est formé par une partie (38) du dispositif d'entraînement de bobine (28).
